(19) Europäisches Patentamt
European Patent Office
Office européen des brevets

(11) **EP 2 832 211 A1**

(12) **EUROPEAN PATENT APPLICATION**
published in accordance with Art. 153(4) EPC

(43) Date of publication:
**04.02.2015 Bulletin 2015/06**

(21) Application number: **13767692.0**

(22) Date of filing: **28.03.2013**

(51) Int Cl.:
**A01K 1/015** (2006.01)   **A01K 23/00** (2006.01)

(86) International application number:
**PCT/JP2013/059415**

(87) International publication number:
**WO 2013/147103 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2012 JP 2012077696**

(71) Applicant: **UNI-CHARM CORPORATION**
**Shikokuchuo-shi**
**Ehime 799-0111 (JP)**

(72) Inventors:
• **MATSUO, Takayuki**
  **Kanonji-shi**
  **Kagawa 769-1602 (JP)**
• **HIRAO, Tomoko**
  **Kanonji-shi**
  **Kagawa 769-1602 (JP)**

(74) Representative: **Knights, Rupert**
**Saunders & Dolleymore LLP**
**9 Rickmansworth Road**
**Watford, Hertfordshire WD18 0JU (GB)**

(54) **SYSTEM TOILET FOR DOGS**

(57)    Provided is a toilet system for dogs for which a liquid permeable panel is not easily dislodged. This toilet system (1) for dogs is provided with: a lower container (2) that has an excrement accommodating part (21) for accommodating excrement and is open on the upper side; a disposable liquid permeable panel (3) that is disposed so as to cover the upper part of the excrement accommodating part (21) and has water absorbency; a panel support part (4) that is disposed between the lower container (2) and the liquid permeable panel (3) and supports the liquid permeable panel (3); and a panel holding part (10) that holds down at least a portion of the liquid permeable panel (3) in the vicinity of the peripheral edge part thereof from the upper surface side of the liquid permeable panel (3).

FIG. 5

**Description**

TECHNICAL FIELD

The present invention relates to a toilet system for dogs.

BACKGROUND ART

Heretofore, indoor portable toilets for animals have been used for disposal of waste of animals that are kept indoors. One such animal toilet has been proposed by, for example, Patent Document 1, including a urine absorptive pad having absorbency placed in a tray that receives waste and a liquid-permeable non-woven cloth covering the surface of the urine absorptive pad.

For the animal toilet as described in Patent Document 1; however, an animal places itself directly on the non-woven cloth to excrete. Therefore, an animal can step on waste and wet its paws coming into contact with the urine spread over the non-woven cloth after the excrement. When the wetting arises, the floors in the house become contaminated because the animal moves about in the house with wet paws. Hence, there has been a strong need for an animal toilet that is capable of preventing animals from wetting their paws when they excrete.

The applicant has proposed a toilet system for dogs including: a waste container having a waste storage portion; a liquid-permeable panel, disposed so as to cover the waste storage portion, which is capable of absorbing liquid and has multiple pores through it in the thickness direction; and a support portion disposed between the waste storage portion and the liquid-permeable panel for supporting the liquid-permeable panel (see Patent Document 2).

According to the toilet system for dogs proposed in Patent Document 2, most of the liquid component in the waste on the liquid-permeable panel permeates through the liquid-permeable panel and received in the waste storage portion, and any remaining liquid on the liquid-permeable panel is absorbed into the liquid-permeable panel 3. This does not allow the liquid component of waste or urine to stay much on the liquid-permeable panel, protecting the dog's paws from getting wet.

Patent Document 1: Japanese Unexamined Patent Application, Publication No. 2002-142599
Patent Document 2: Japanese Unexamined Patent Application, Publication No. 2011-135839

DISCLOSURE OF THE INVENTION

Problems to be Solved by the Invention

However, with the toilet system for dogs proposed in Patent Document 2, sometimes the liquid-permeable panel becomes detached when a dog rushes in and out of the toilet system for dogs or when a curious or distressed dog scratches the liquid-permeable panel.

Thus, an object of the present invention is to provide a toilet system for dogs which is resistant to detachment of the liquid-permeable panel.

Means for Solving the Problems

The present invention is related to a toilet system for dogs that includes: a lower container having a waste storage portion to contain waste and being open at a top face thereof; a disposable liquid-permeable panel disposed to cover an upper portion of the waste storage portion; a panel support portion disposed between the lower container and the liquid-permeable panel for supporting the liquid-permeable panel; and a panel-holding section for holding down the liquid-permeable panel from a topside at least one position near a periphery of the liquid-permeable panel.

The toilet system for dogs preferably further includes a top container having a wall section raised surrounding the liquid-permeable panel, and in which the panel-holding section is constituted of an interior lower end of the wall section.

The panel support portion is preferably constituted of a plate member having multiple through holes and supports substantially an entire area of a bottom face of the liquid-permeable panel, and in which a position of the panel-holding section for holding down the liquid-permeable panel is in a region where the through holes are formed in the panel support portion.

The toilet system for dogs preferably further includes a frame member having substantially a same profile as the liquid-permeable panel and being disposed on a top face of the liquid-permeable panel, and in which the panel-holding section is constituted of the frame member.

The panel-holding section is preferably constituted of a pin-like member that is inserted from the topside of the liquid-permeable panel toward the panel support portion, penetrating through the liquid-permeable panel.

Effects of the Invention

In accordance with the toilet system for dogs of the present invention, the liquid-permeable panel is resistant to detachment even when a dog rushes in and out of the toilet system for dogs.

BRIEF DESCRIPTION OF THE DRAWINGS

Fig. 1 is a perspective view showing the toilet system for dogs of the first embodiment.
Fig. 2 is an exploded perspective view of the toilet system for dogs shown in Fig. 1.
Fig. 3 is a plan view of the toilet system for dogs shown in Fig. 1.
Fig. 4 is a plan view of the toilet system for dogs shown in Fig. 1, excluding the liquid-permeable panel.
Fig. 5 is a partially enlarged cross-sectional view of the toilet system for dogs shown in Fig. 1 as well as a cross-sectional view taken along the X-X line in Fig. 3.
Fig. 6 is a partially enlarged cross-sectional view of the toilet system for dogs shown in Fig. 1 as well as a cross-sectional view taken along the Y-Y line in Fig. 3.
Fig. 7 is an enlarged plan view of the liquid-permeable panel.
Fig. 8 is a cross-sectional view taken along the Z-Z line in Fig. 7.
Fig. 9 is a cross-sectional view showing the toilet system for dogs of Fig. 1 in a disassembled state.
Fig. 10 is an exploded perspective view showing the toilet system for dogs of a second embodiment that is partially disassembled.
Fig. 11 is a plan view of the toilet system for dogs of the second embodiment.
Fig. 12 is a perspective view of the toilet system for dogs of a third embodiment.
Fig. 13 is a plan view of the toilet system for dogs of the third embodiment.
Fig. 14 is a perspective view of the toilet system for dogs of a fourth embodiment.
Fig. 15 is a cross-sectional view taken along the A-A line in Fig. 14.

EXPLANATION OF REFERENCE NUMERALS

1 Toilet system for dogs
2 Lower container
3 Liquid-permeable panel
4 Panel support portion
5 Top container
10 Panel-holding section
10A Frame member (panel-holding section)
10B Bar-like member (panel-holding section)
10C Pin-like member (panel-holding section)
51 Top side wall (wall section)

PREFERRED MODE FOR CARRYING OUT THE INVENTION

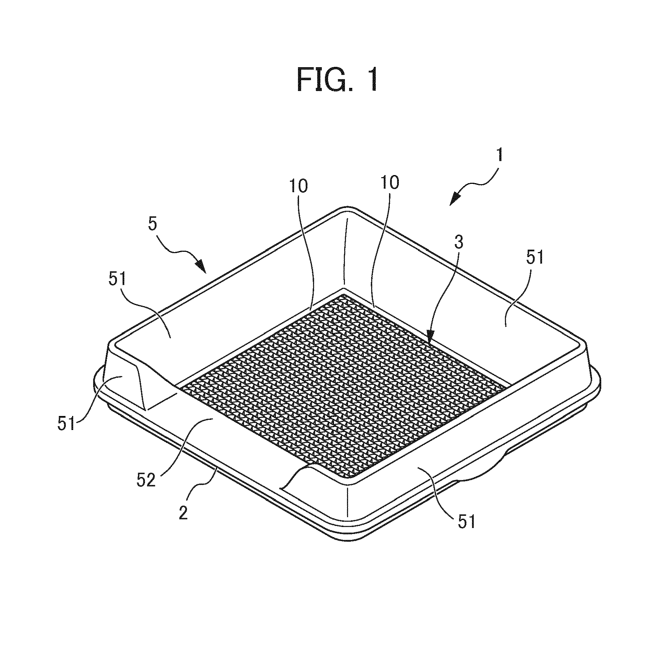

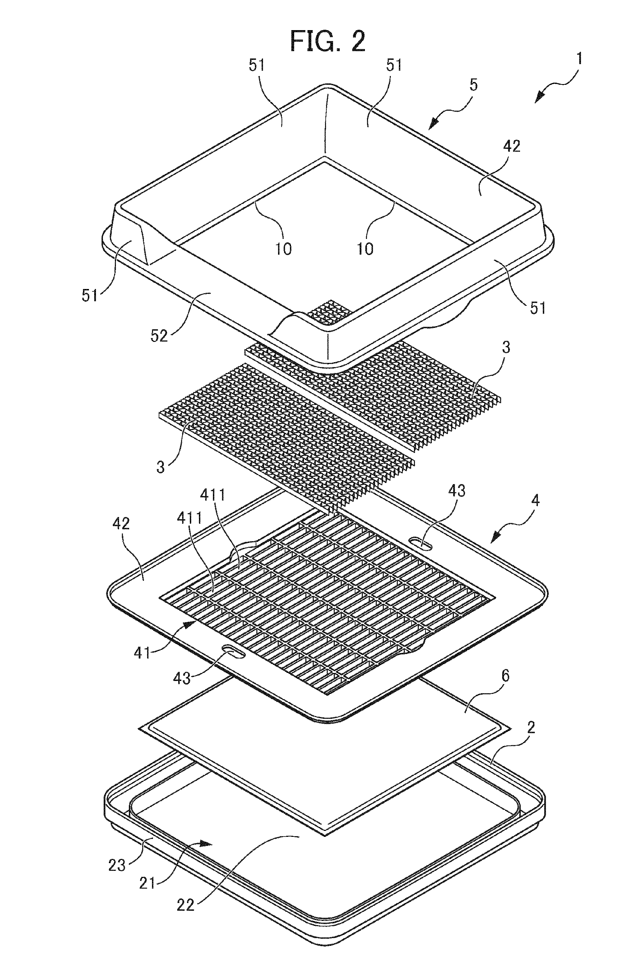

Preferable embodiments of the present invention will now be described with reference to the drawings. A toilet system 1 for dogs of this embodiment, as shown in Fig. 1 and Fig. 2, includes a lower container 2, a liquid-permeable panel 3, a panel support portion 4, a top container 5, and a panel-holding section 10 for holding down the liquid-permeable panel 3 from the topside.

It is noted that, the term "dog(s)" as used herein primarily refers to a dog that is kept indoors, more specifically, a small dog whose body weight is about 7 kg or less.

The lower container 2 has an open top and a waste storage portion 21 to contain waste. As shown in Fig. 2, Fig. 5 and Fig. 6, the lower container 2 has a substantially square bottom portion 22 and four base side walls 23 raised from respective sides of the bottom portion 22 at predetermined angles relative to the bottom portion 22. Thus, the bottom portion 22 and the four base side walls 23 together create a room which serves as the waste storage portion 21. An absorptive sheet 6 for absorbing liquids such as urine and holding them therein is disposed in the waste storage portion 21.

As shown in Fig. 1 to Fig. 3, the liquid-permeable panel 3 is disposed above the waste storage portion 21. The liquid-permeable panel 3 will be described later in detail.

As shown in Fig. 2, Fig. 5, and Fig. 6, the panel support portion 4 is disposed between the lower container 2 and the liquid-permeable panel 3 to support the entire area of the bottom face of the liquid-permeable panel 3. As shown in Fig. 2, the panel support portion 4 is made of a planar member that is square in plan view and has substantially the same shape and size as the lower container 2.

As shown in Fig. 2, the panel support portion 4 includes a grid section 41 having multiple through holes 411 that are shaped in a grid, a peripheral support portion 42 provided around the grid section 41, and a pair of finger holes 43 made in the peripheral support portion 42.

The grid section 41 is disposed in the center of the panel support portion 4. The grid section 41 is formed to be square in plan view, having substantially the same shape and size as the liquid-permeable panel 3.

The multiple through holes 411 are formed to have a rectangular shape, and are aligned in rows and columns, spaced away from each other by predetermined distances. The size of the respective multiple through holes 411, in view of ensuring preferable liquid permeability, is preferably between 1 mm and 100 mm per side, more preferably, between 10 mm and 60 mm.

In the embodiment, a shape of the through holes 441 are formed in a rectangular shape with a length of 55 mm and a width of 15 mm, respectively, in view of ensuring preferable liquid permeability and also the strength of the panel support portion 4. The through holes 441 are disposed so that their longitudinal directions are along the direction from a toilet access 53 to be described later in the top container 5 toward the back of the top container 5.

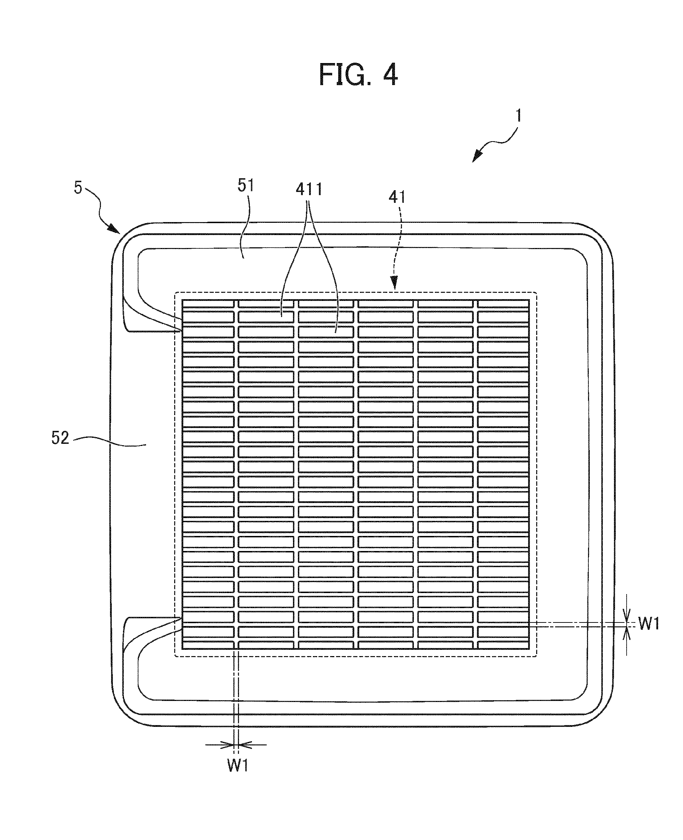

The width W1 of the part where no through hole 411 is made in the grid section 41 (or, the width of a grid bar; see Fig. 4) is preferably between 1 mm and 10 mm, more preferably, between 2 mm and 6 mm, in view of ensuring preferable liquid permeability and also the strength of the panel support portion 4.

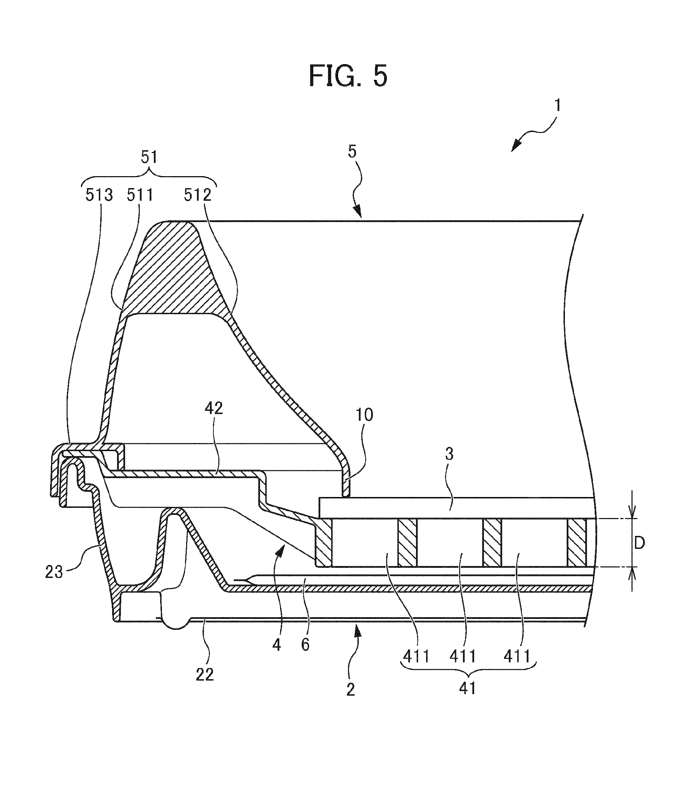

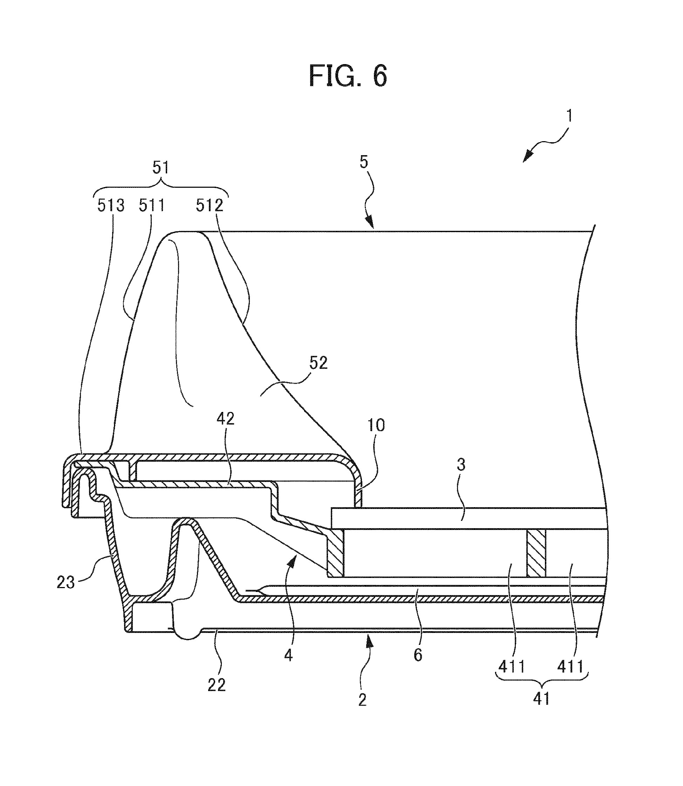

The peripheral support portion 42 constitutes a region in the panel support portion 4 where the grid section 41 is not made, or where no through hole 411 is made. As shown in Fig. 5 and Fig. 6, the peripheral support portion 42 is positioned at a slightly higher level compared to the grid section 41. Thus, the grid section 41 is made in the region surrounded by the peripheral support portion 42 and is slightly convex relative to the peripheral support portion 42.

The two finger holes 43 are opposite to each other with the grid section 41 between them. The pair of finger holes 43 serve as regions to insert fingers into when removing the panel support portion 4 disposed above the lower container 2 in the toilet system 1 for dogs.

The thickness D of the grid section 41 in the panel support portion 4 is preferably between 1 mm and 15 mm in view of ensuring the strength of the panel support portion 4 and preventing liquids, such as urine, in the waste storage portion 21 from returning to the liquid-permeable panel 3 (see Fig. 5).

The top container 5 is disposed above the panel support portion 4 on which the liquid-permeable panel 3 has been placed. As shown in Fig. 2, the top container 5 is formed to be a frame having a square profile in plan view, and includes four top side walls 51 as a wall section raised from and surrounding the liquid-permeable panel 3, and a toilet access 52 that is provided in one of the four top side walls 51.

As shown in Fig. 5, each top side wall 51 includes an exterior side wall 511, an interior side wall 512, and a lower-container engagement section 513.

The exterior side wall 511 forms the exterior surface of the top side wall 51. The exterior side wall 511 is a slope and as it extends upward, it becomes slightly inclined inwardly.

The interior side wall 512 forms the interior surface of the top side wall 51. The interior side wall 512 is a slope as well, but it becomes inclined inwardly as it extends downward and has a slight convex curve downwards. The vicinity of the lower end of the interior side wall 512 is a perpendicular plane extending substantially perpendicularly. Furthermore, as shown in Fig. 4 to Fig. 6, the lower end of the interior side wall 512 is positioned in the region in the panel support portion 4 where the through holes 411 are made, namely, the grid section 41.

The lower-container engagement section 513 has a downward curved shape after extending to the exterior from the lower end of the exterior side wall 511. When the top container 5 is disposed above the lower container 2, the lower container engagement section 513 engages with the upper part of the base side wall 23, holding the peripheral section of the panel support portion 4 between them.

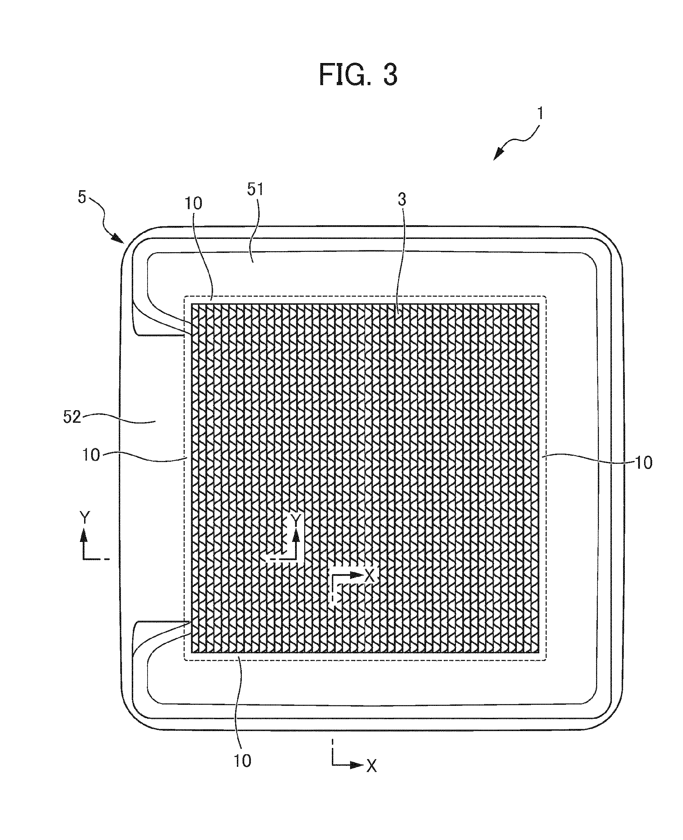

As shown in Fig. 3 and Fig. 6, the toilet access 52 is formed by reducing the height of one top side wall 51 among the four top side walls 51. A dog using the toilet system 1 for dogs can enter and exit the top container 5 through the toilet access 52.

The panel-holding section 10 holds down the liquid-permeable panel 3 from the topside at at least one position near the periphery of the liquid-permeable panel 3.

In the first embodiment, the panel-holding section 10 is formed by the lower end of the interior side wall 512 of the top side wall 51. Thus, as shown in Fig. 5 and Fig. 6, the lower end of the interior side wall 512 is positioned in a region in the panel support portion 4 where the through holes 411 are made, namely, the grid section 41. In this state, the lower ends of the interior side walls 512 hold down the entire periphery of the liquid-permeable panel 3 against the panel support portion 4, as shown in Fig. 3.

The position for the panel-holding section 10 (i.e. the lower ends of the interior side walls 512) to hold the liquid-permeable panel 3 is preferably between 5 mm to 15 mm from the periphery of the liquid-permeable panel 3 in view of holding and securing the liquid-permeable panel 3 in a preferable manner (see Fig. 5 and Fig. 6).

The lower container 2, panel support portion 4, and top container 5, as described above, can be made of a variety of materials including wood, metal, plastic, etc. Among these materials, the use of plastic is preferable considering some issues such as odors caused by waste-infiltrated materials and corrosion due to wastes. A variety of plastics can be used, such as polyethylene, polypropylene, polyvinyl chloride resin, polystyrene, ABS resin, AS resin, polyester resin (polyethylene terephthalate and the like), polyamide resin, polycarbonate resin, and the like.

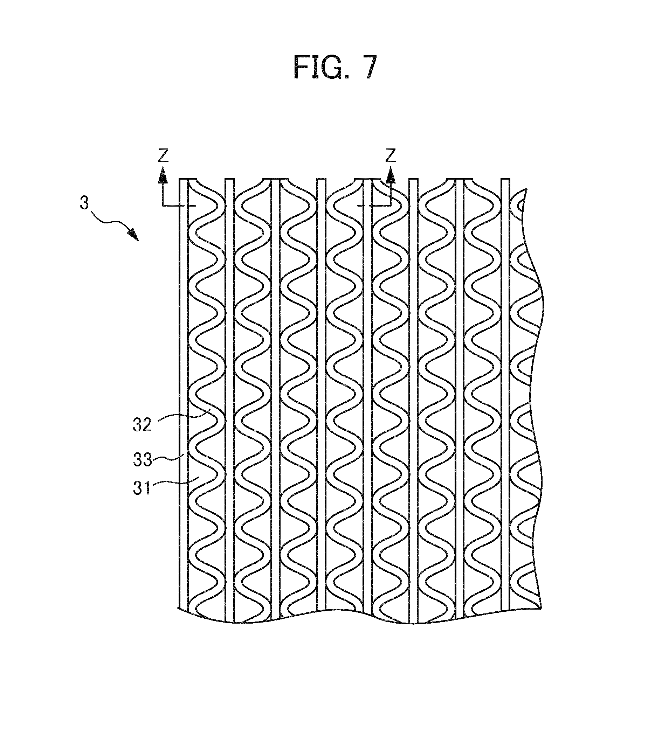

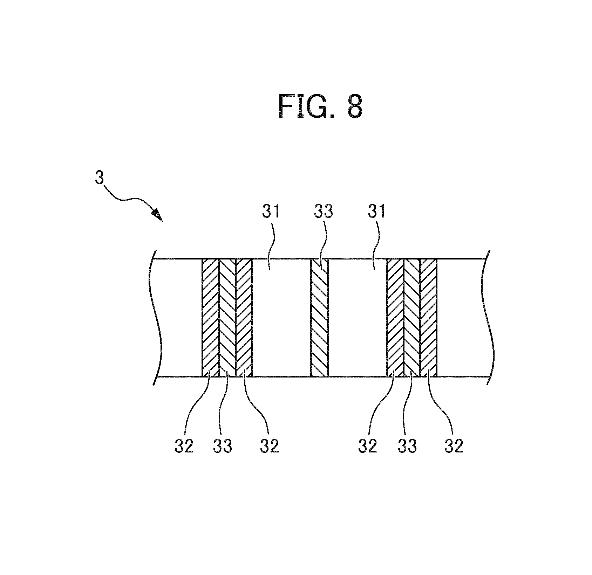

A detailed description of the liquid-permeable panel 3 will now be provided with reference to Fig. 7 and Fig. 8.

Fig. 7 is a plan view of the liquid-permeable panel 3, while Fig. 8 is a cross-sectional view taken along the Z-Z line in Fig. 7.

The liquid-permeable panel 3 is made of a disposable, water-absorptive panel. The liquid-permeable panel 3 is disposed on the topside of the panel support portion 4, covering the entirety of the top face of the grid section 41.

In the embodiment, a piece of the liquid-permeable panel 3 is formed in a rectangular shape and sized to be substantially a half of the grid section 41 as shown in Fig. 2, and thus two liquid-permeable panels 3 cover the top face of the grid section 41. Each liquid-permeable panel 3 is disposed so that its longitudinal direction is along the direction in which the top side wall 51 having the toilet access 52 in the top container 5 extends. The liquid-permeable panel 3 has a predetermined level of liquid permeability, liquid absorbability, and deodorant effect.

As shown in Fig. 7 and Fig. 8, the liquid-permeable panel 3 has multiple pores 31 through its thickness direction. In the liquid-permeable panel 3, liquid wastes are drained through the multiple pores 31 in the thickness direction of the liquid-permeable panel 3.

The average area of the openings of the multiple pores 31 is preferably between 10 $mm^2$ and 100 $mm^2$ per opening and more preferably, between 15 $mm^2$ and 60 $mm^2$ per opening. If the average area of the openings of the pores 31 is too small, the amount of waste remaining in the liquid-permeable panel 3 would increase, in turn lowering the ability to prevent dog paws from getting wet. Or, if the average area of the openings of the pores 31 is too large, the thickness of the liquid-permeable panel 3 needs to be increased in order to impart sufficient strength thereto, which is not desirable either.

Preferable structures for the liquid-permeable panel 3 include a honeycomb structure or a corrugated honeycomb structure. Among panels having such structures, those panels having the corrugated honeycomb structure are more preferable for their ease of manufacture and availability at low prices.

One example of a liquid-permeable panel 3 having the corrugated honeycomb structure is, for example, a laminated corrugated board that is 5 mm thick, having pores 31 (or cells) each having a size of 5 mm. Examples of materials for the panel can include a waterproof liner having absorbability of 10 to 20 $g/m^2$ in $COBB_{30}$ measurement (JIS-P8140). A corrugated honeycomb panel having absorbability in the above range is preferable because it absorbs water slowly and has a sufficient strength when wet. Due to having the multiple pores 31 penetrating through the thickness direction, the liquid-permeable panel 3 drains urine through the multiple pores 31 without letting the urine spread over the surface of the liquid-permeable panel 3, on which a dog will place itself.

As shown in Fig. 2, the liquid-permeable panel 3 is positioned so that its longitudinal direction extends along the direction in which the width sides of the multiple through holes 411 in the grid section 41 are successively arrayed. In other words, the longitudinal direction of the grid bars of the grid section 41 is orthogonal to (or substantially orthogonal to) the direction in which a corrugated sheet 32 and a planar sheet 33 in the liquid-permeable panel 3 extend. With this layout, the longitudinal grid bars of the grid section 41 are reinforced by the corrugated sheet 32 and the planar sheet 33 composing the liquid-permeable panel 3, which, in turn, jointly with the panel support portion 4, reinforces the toilet system 1 for dogs. Consequently, the panel support portion 4 may be configured to be thin.

A variety of materials can be used without limitation for the water-absorptive panel for the liquid-permeable panel 3 as long as the materials have excellent permeability for waste and a predetermined level of water absorbability. Specific examples of materials having water absorbability include: wood fibers including pulp; a variety of organic and inorganic porous materials; and woven and non-woven cloths made of a variety of organic and inorganic fibrous materials. Specific examples of organic fibrous materials include: wood fibers (such as pulp); cotton; cellulose fiber materials such as hemp; animal fibers such as animal hair/fur (such as wool); or synthetic fibers such as polyolefin fibers (such as polyethylene and polypropylene), polyester fibers (such as polyethylene terephthalate), nylon fibers (such as nylon 6 and nylon 66), acrylic fibers, and the like.

Among the above-listed materials, pulp is preferable due to ease of processing and relatively low prices, but a corrugated board is more preferable due to its ability to provide both suitable liquid permeability and water absorbability. In the latter case, the corrugated board preferably contains a hydrophobic or repellent agent such as a sizing agent, wherein the level of permeability can be predetermined depending on the type and amount of the sizing agent.

The thickness of the liquid-permeable panel 3 ranges between 3 mm and 25 mm, preferably between 3 mm and 10 mm, more preferably between 3 mm and 7 mm. With the liquid-permeable panel 3 having a thickness in the above range, liquids, such as urine, that have drained through the liquid-permeable panel 3 in the thickness direction cannot easily return to the outer surface (top face) of the liquid-permeable panel 3.

If the thickness of the liquid-permeable panel 3 is less than 3 mm, deformation of the liquid-permeable panel 3 can hinder liquid (urine) drainage into the waste storage portion 21 and even cause damage to the liquid-permeable panel 3 due to the body weight of a dog, thus creating problems in terms of strength.

If the thickness of the liquid-permeable panel 3 is beyond 25 mm, the distance from the lower end of the waste container 2 to the top face of the liquid-permeable panel 3 becomes more in the toilet system 1 for dogs. Moreover, the amount of waste absorption in the liquid-permeable panel 3 per discharge will increase, requiring more frequent changing, while the liquid-permeable panels 3 will be bulky to store.

A preferable liquid permeability for the liquid-permeable panel 3 is 90% or more, and more preferably, 93% or more. By using a liquid-permeable panel 3 with such liquid permeability, the amount of urine adhered and contained in the liquid-permeable panel 3 decreases, less urine spreads within the liquid-permeable panel 3, and wetting of paws caused by stepping on the liquid permeable panel 3 is restricted. The liquid permeability for the liquid-permeable panel 3 can be measured using the method as follows.

Method for measuring water absorbability

First, a 5 cm x 5 cm sample cut from a liquid-permeable panel 3 or the like is weighed to give a weight (A). Secondly, the cut sample is soaked in artificial urine for one minute. After the one minute of soaking, the sample(s) is drawn up and the artificial urine is wiped off the surface, and a weight (B) is measured (for each sample). Using the following formula, the water absorbability value is calculated. It is noted that the artificial urine is the same as that used in the measurement of liquid permeability.

Formula for water absorbability

$$\text{Water absorbability (\%/min)} = (\text{weight (B)} - \text{weight (A)})/\text{weight (A)} \times 100$$

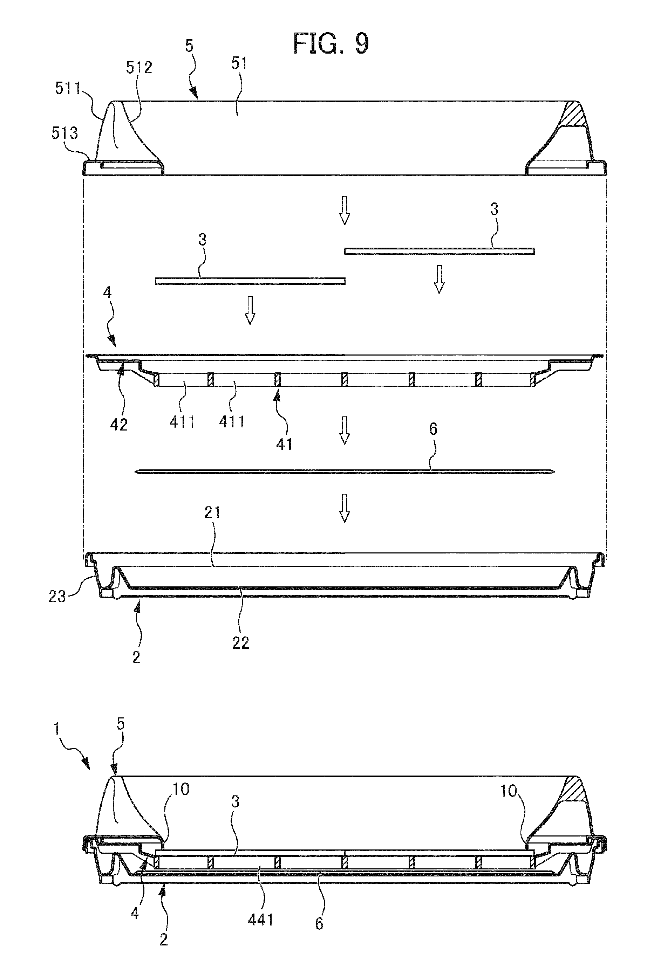

Fig. 9 is an enlarged cross-sectional view of the toilet system 1 for dogs.

As shown in Fig. 9, the toilet system 1 for dogs, as described above, is assembled in the following manner: in a state that the absorptive sheet 6 is contained in the waste storage portion 21, the panel support portion 4 is disposed above the lower container 2; the liquid-permeable panel 3 is disposed on the top face of the panel support portion 4; and the top container 5 is disposed above the panel support portion 4 on which the liquid-permeable panel 3 has been disposed; thus, the toilet is used. In this state, as shown in Fig. 5 and Fig. 6, the vicinity of the periphery of the liquid-permeable panel 3 is held down from the topside by the lower end of the interior side wall 512 of the top container 5 and secured thereto.

The functional effects of the toilet system 1 for dogs of the first embodiment, as described above, are as follows.

(1) The toilet system 1 for dogs is configured to include the panel-holding section 10 that holds down the liquid-permeable panel 3 from the topside. Thus, the panel-holding section 10 can securely hold the liquid-permeable panel 3, which is supported by the panel support portion 4. As a result, the liquid-permeable panel is hard to detach even when a dog rushes in and out of the toilet system 1 for dogs or when the dog scratches the liquid-permeable panel out of curiosity or stress.

(2) The toilet system 1 for dogs is configured to include the top container 5 having the top side walls 51, wherein the interior lower end of the respective top side wall 51 (i.e. the lower end of the respective interior side wall 512) serves as the panel-holding section 10. Consequently, the top container 5 is disposed above the panel support portion 4 while the liquid-permeable panel 3 is disposed on the top face of the panel support portion 4 so that the top side walls 51 can readily hold down the liquid-permeable panel 3. Hence, the toilet system 1 for dogs, having a simple structure yet being resistant to detachment of the liquid-permeable panel 3, can be provided. Because the lower ends of the interior side walls 512 serve as the panel-holding section 10, the entire periphery of the liquid-permeable panel 3 is held down, making the liquid-permeable panel 3 more difficult to detach.

(3) The panel support portion 4 is made of a planar member having the multiple through holes 411, the position for the lower ends of the interior side walls 512 (i.e. the panel-holding section 10) to hold down the liquid-permeable panel 3 is located within the grid section 41, which is the region where the through holes 411 are made in the panel support portion 4. Thus, the liquid that has reached the liquid-permeable panel 3 via the interior side wall(s) 512 and passed the liquid permeable panel 3 can be quickly drained into the waste storage portion 21 from the panel support portion 4 through the grid section 41. This contributes to reducing odors from the toilet system 1 for dogs because, even when a dog urinates in the vicinity of the periphery of the liquid-permeable panel 3, that is, when the interior side wall(s) 512 is splashed with the urine which eventually reaches the vicinity of the periphery of the liquid-permeable panel 3 via the interior side wall(s) 512, the urine is not allowed to stay on the panel support portion 4 but is drained into the waste storage portion 21. Furthermore, the sanitary condition of the toilet system 1 for dogs can be maintained at a good level for a longer period of time, which means that the toilet system 1 for dogs needs cleaning less often.

(4) The vicinities of the lower ends of the interior side walls 512 are formed by perpendicular planes. As a result, the urine splashed onto the interior side walls 512 is drained down to the liquid-permeable panel 3 before staying there, whereby odors from the toilet system 1 for dogs can be further reduced.

(5) The liquid-permeable panel 3 is made of a laminated corrugated board having a thickness of between 3 mm and 25 mm. This increases the rigidity of the liquid-permeable panel 3 compared to sheet members made of, for example, a non-woven cloth; therefore, the liquid-permeable panel 3 can be readily secured as it is held down from the topside by the lower ends of the interior side walls 512. Thus, the liquid-permeable panel 3 can be secured without providing any complicated mechanism such as convex and/or concave profiles on the lower ends of the interior side walls 512 and the panel support portion 4. Therefore, the toilet system 1 for dogs can be made without having a complicated profile on a securing section of the liquid-permeable panel 3 exposed to urine, yet urine is not allowed to stay at the securing section.

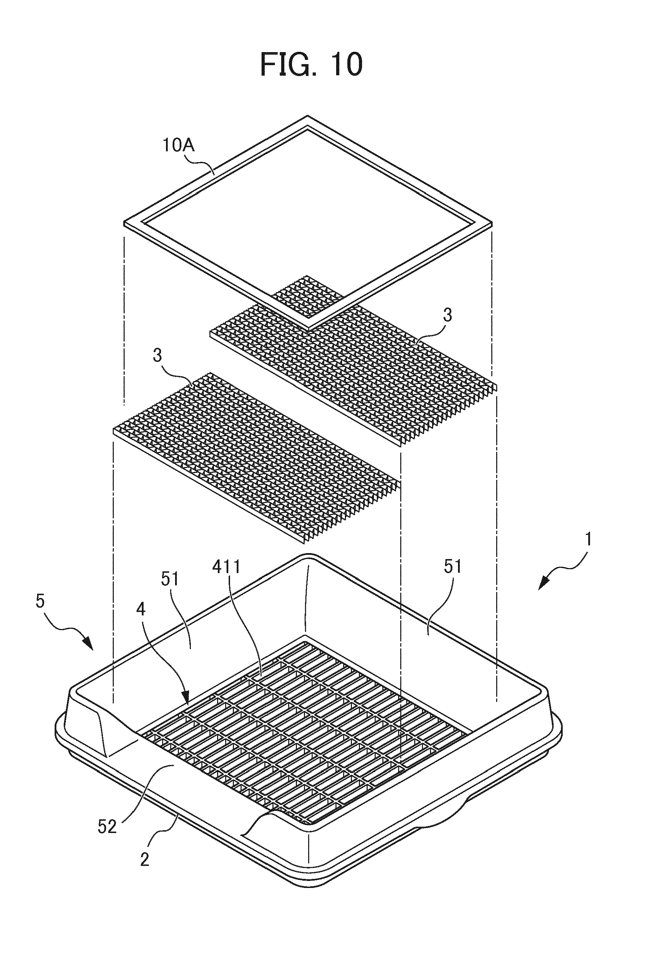

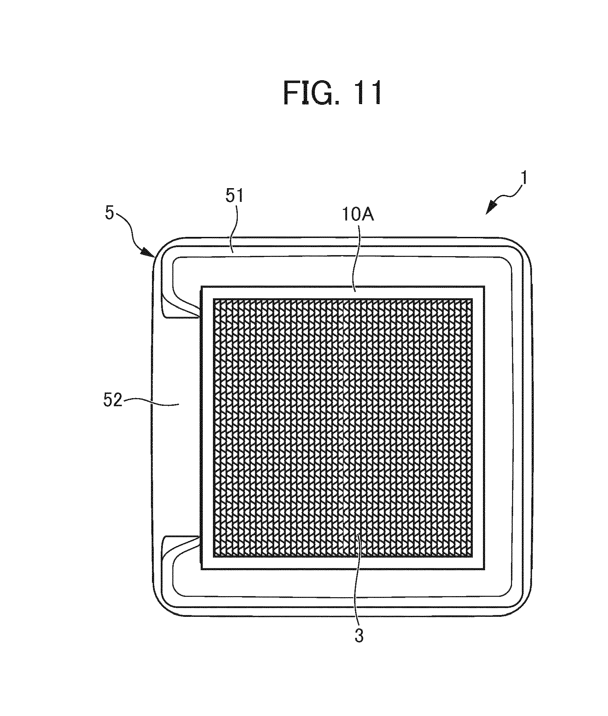

Turning now to Fig. 10 and Fig. 11, a toilet system for dogs of a second embodiment according to the present invention will be described. Fig. 10 is a partial exploded perspective view of the toilet system 1 for dogs of the second embodiment. Fig. 11 is a plan view of the toilet system 1 for dogs of the second embodiment.

In the second and subsequent embodiments, the same components will be denoted by the same reference numbers, and the description thereof will be omitted or simplified.

The primary difference between the toilet system 1 for dogs of the second embodiment and that of the first embodiment is the configuration of the panel-holding section 10.

In the second embodiment, the toilet system 1 for dogs includes a frame member 10A as the panel-holding section. The frame member 10A has substantially the same shape as the profile of the liquid-permeable panel 3. As shown in Fig. 10 and Fig. 11, the frame member 10A is disposed on the top face of the liquid-permeable panel 3, holding it down in the vicinity of the entire periphery of the liquid-permeable panel 3.

The frame member 10A is configured to have a thickness of between 2 mm and 5 mm, a width of between 15 mm and 25 mm, and a weight of between about 50 g and 1500 g. The frame member 10A is made of a readily washable member such as an acrylic, stainless steel, or steel plate.

It is noted that, in the second embodiment, the liquid-permeable panel 3 has a square shape whose sides have substantially the same length as the distance between two opposing interior side walls 512 of the top side walls 51 of the top container 5. In assembling the toilet system 1 for dogs, the liquid-permeable panel 3 is disposed on the top face of the panel support portion 4 after the top container 5 is mounted. Following this, the frame member 10A is disposed on the top face of the liquid-permeable panel 3.

In accordance with the toilet system 1 for dogs of the second embodiment, in addition to (1) through (5) as described above, the following functional effect can be obtained.

(6) The panel-holding section is made of the frame member 10A. Because the frame member 10A holds down the entire periphery of the liquid-permeable panel 3, the liquid-permeable panel 3 is more difficult to detach.

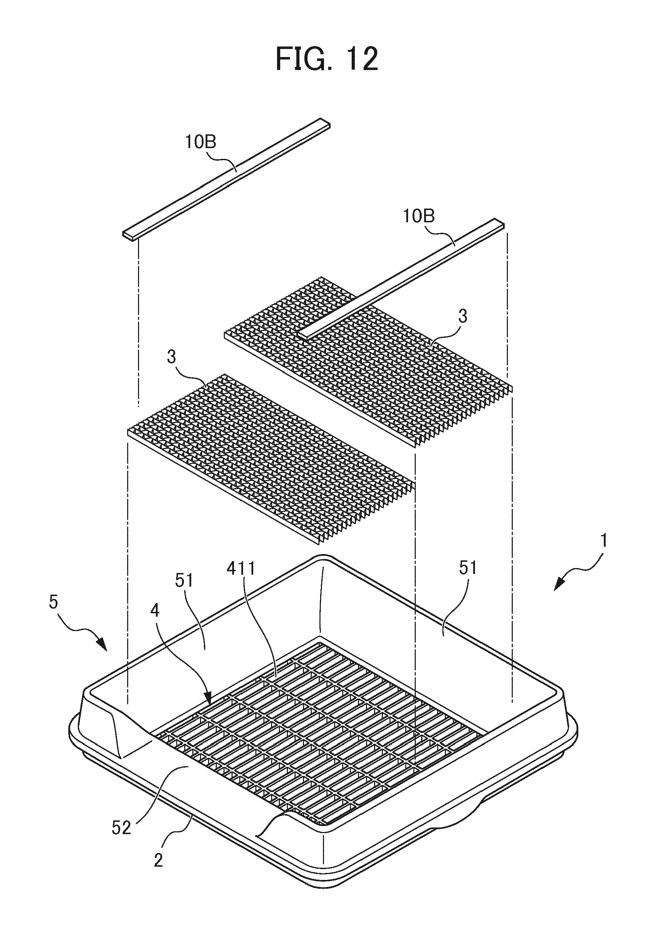

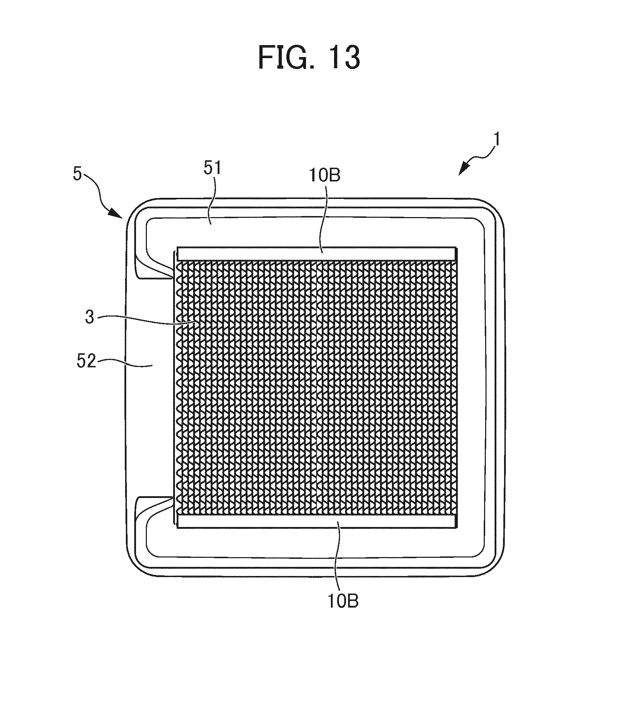

Turning now to Fig. 12 and Fig. 13, a toilet system for dogs of a third embodiment according to the present invention will be described. Fig. 12 is a partial exploded perspective view of the toilet system 1 for dogs of the third embodiment. Fig. 13 is a plan view of the toilet system 1 for dogs of the third embodiment.

The primary difference between the toilet system 1 for dogs of the third embodiment and that of the second embodiment is that the panel-holding section is made of a bar-like member 10B.

In the third embodiment, the toilet system 1 for dogs includes a bar-like member 10B as the panel-holding section. The bar-like member 10B is formed to have a length substantially the same as the distance between the two opposing interior side walls 512 of the top side walls 51 of the top container 5. As shown in Fig. 12 and Fig. 13, the bar-like members 10B are disposed on the top face of the liquid-permeable panel 3 to hold down vicinities of the periphery of the liquid-permeable panel 3, at two positions. In the second embodiment, the bar-like members 10B are disposed crossing the boundary between the two liquid-permeable panels 3, as shown in Fig. 12.

The bar-like member 10B is configured to have a thickness of between 2 mm and 5 mm, a width of between 15 mm and 25 mm, and a weight of between about 20 g and 750 g. The bar-like member 10B is made of a readily washable material such as an acrylic, stainless steel, or steel plate.

In accordance with the toilet system 1 for dogs of the third embodiment, the functional effects of (1) through (5), as described above, can be obtained.

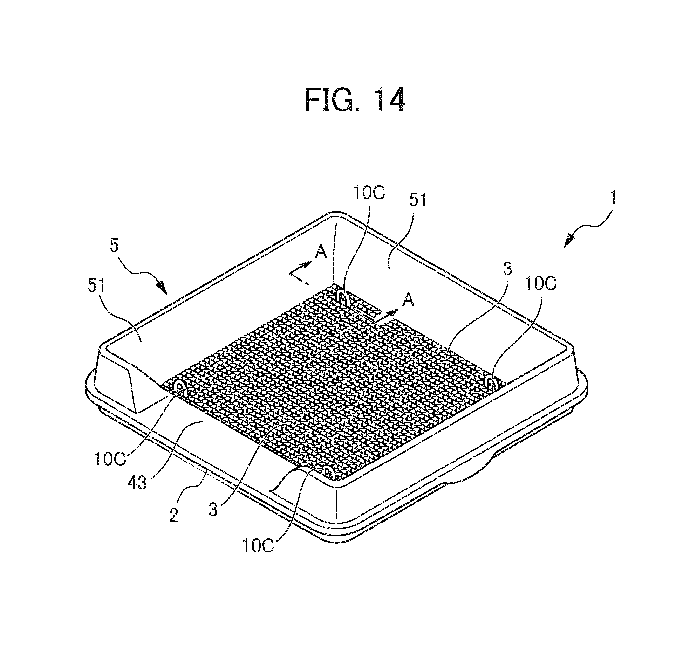

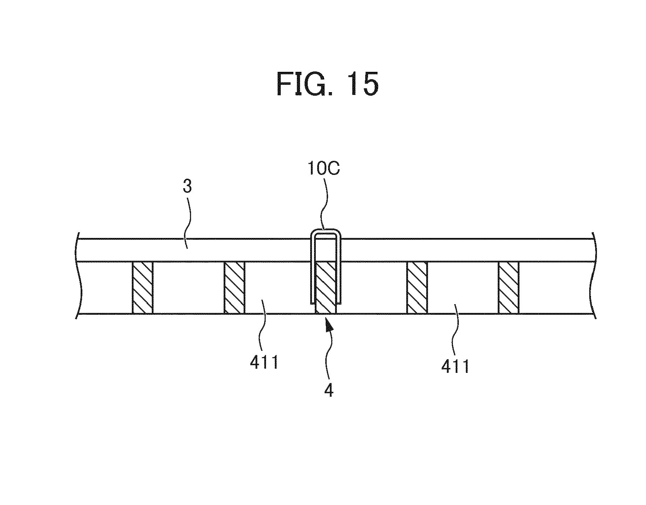

Turning now to Fig. 14 and Fig. 15, the toilet system for dogs of the fourth embodiment according to the present invention will be described. Fig. 14 is a perspective view of the toilet system 1 for dogs of the fourth embodiment. Fig. 15 is a cross-sectional view taken along the A-A line in Fig. 14.

The primary difference between the toilet system 1 for dogs of the fourth embodiment and that of the second embodiment is that the panel-holding section is made of a pin-like member 10C.

In the fourth embodiment, the toilet system 1 for dogs includes a pin-like member 10C as the panel-holding section. The pin-like member 10C is inserted from the topside of the liquid-permeable panel 3 toward the panel support portion 4, and its penetrating through the liquid-permeable panel 3 holds down the liquid-permeable panel 3.

More specifically, the pin-like member 10C has a configuration of a bifurcated clip with two tip ends as shown in Fig. 14 and Fig. 15. The bifurcated tip ends of the pin-like member 10C are inserted into the liquid-permeable panel 3 and in this state, then inserted into adjacent through holes 411, respectively, together pinching a grid bar between the adjacent through holes 411. Thus, the liquid-permeable panel 3 is securely held against the panel support portion 4.

In the fourth embodiment, the pin-like members 10C are disposed near the four corners of the liquid-permeable panel 3 that is square in plan view, respectively.

In accordance with the toilet system 1 for dogs of the fourth embodiment, in addition to (1) through (5) as described above, the following functional effect can be obtained.

(7) The panel-holding section is made of the pin-like member 10C. As a result, by inserting the pin-like member 10C into the liquid-permeable panel 3, the liquid-permeable panel 3 can be held down readily, and by removing the pin-like member 10C from the liquid-permeable panel 3, the liquid-permeable panel 3 can be removed readily. This provides improved operability when changing the liquid-permeable panel 3.

Preferable embodiments of the present invention have been described; however, it is understood that the present invention is not limited to the above embodiments and that modifications are possible as desired.

For example, although the entire periphery of the liquid-permeable panel 3 is held down by the lower ends of the interior side walls 512 in the first embodiment, the invention is not limited thereto. That is, the periphery of the liquid-permeable panel may be held down at two opposing positions by the lower ends of the interior side walls.

Or, although the panel-holding section is made of two bar-like members 10B in the third embodiment, the invention is not limited thereto. That is, the panel-holding section may be made of three bar-like members or four bar-like members.

**Claims**

1. A toilet system for dogs comprising:

   a lower container having a waste storage portion to contain waste and being open at a top face thereof;
   a disposable liquid-permeable panel disposed to cover an upper portion of the waste storage portion;
   a panel support portion disposed between the lower container and the liquid-permeable panel for supporting the liquid-permeable panel; and
   a panel-holding section for holding down the liquid-permeable panel from a topside at least one position near a periphery of the liquid-permeable panel.

2. The toilet system for dogs according to claim 1, further comprising a top container having a wall section raised from and surrounding the liquid-permeable panel, wherein
   the panel-holding section is constituted of an interior lower end of the wall section.

3. The toilet system for dogs according to claim 1 or 2, wherein
   the panel support portion is constituted of a plate member having multiple through holes and supports substantially an entire area of a bottom face of the liquid-permeable panel, wherein
   a position of the panel-holding section for holding down the liquid-permeable panel is in a region where the through holes are formed in the panel support portion.

4. The toilet system for dogs according to claim 1, further comprising a frame member having substantially the same profile as the liquid-permeable panel and being disposed on a top face of the liquid-permeable panel, wherein the panel-holding section is constituted of the frame member.

5. The toilet system for dogs according to claim 1, wherein
the panel-holding section is constituted of a pin-like member that is inserted from the topside of the liquid-permeable panel toward the panel support portion, penetrating through the liquid-permeable panel.

# FIG. 1

# FIG. 2

# FIG. 3

EP 2 832 211 A1

FIG. 4

13

# FIG. 5

# FIG. 6

# FIG. 7

# FIG. 8

# FIG. 9

# FIG. 10

# FIG. 11

# FIG. 12

# FIG. 13

# FIG. 14

# FIG. 15

## INTERNATIONAL SEARCH REPORT

| International application No. |
| --- |
| PCT/JP2013/059415 |

| A. CLASSIFICATION OF SUBJECT MATTER |
| --- |
| *A01K1/015*(2006.01)i, *A01K23/00*(2006.01)i |

According to International Patent Classification (IPC) or to both national classification and IPC

| B. FIELDS SEARCHED |
| --- |
| Minimum documentation searched (classification system followed by classification symbols)<br>A01K1/00-1/035, A01K23/00 |

| Documentation searched other than minimum documentation to the extent that such documents are included in the fields searched |
| --- |
| Jitsuyo Shinan Koho       1922–1996   Jitsuyo Shinan Toroku Koho    1996–2013<br>Kokai Jitsuyo Shinan Koho  1971–2013   Toroku Jitsuyo Shinan Koho    1994–2013 |

| Electronic data base consulted during the international search (name of data base and, where practicable, search terms used) |
| --- |

## C. DOCUMENTS CONSIDERED TO BE RELEVANT

| Category* | Citation of document, with indication, where appropriate, of the relevant passages | Relevant to claim No. |
| --- | --- | --- |
| A | WO 2011/162347 A1  (Uni-Charm Corp.),<br>29 December 2011 (29.12.2011),<br>entire text; all drawings<br>& JP 2012-5443 A        & US 2013/0098300 A<br>& EP 2586300 A          & AU 2011270169 A<br>& CN 102958355 A | 1-5 |
| A | JP 3058181 U  (Iris Ohyama Inc.),<br>08 June 1999 (08.06.1999),<br>entire text; all drawings<br>(Family: none) | 1-5 |

| ☐ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>18 June, 2013 (18.06.13) | Date of mailing of the international search report<br>25 June, 2013 (25.06.13) |
| --- | --- |
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002142599 A

- JP 2011135839 A